# EUROPEAN PATENT APPLICATION

(11) **EP 3 407 175 A1**
(43) Date of publication of application: **28.11.2018**
(21) Application number: 17172552.6
(22) Date of filing: 23.05.2017
(51) Int. Cl.: G06F 3/0487, G06F 1/16, G06F 3/041

(54) **HAND-HOLDABLE ELECTRONIC DEVICES AND METHOD OF DETERMINING AN ELECTROMAGNETIC ENVIRONMENT NEAR TO SUCH A DEVICE**

(71) Applicant: Vestel Elektronik Sanayi ve Ticaret A.S., 45030 Manisa (TR)
(72) Inventor: ABBAK, Mehmet, 45030 Manisa (TR)
(74) Representative: Ascherl, Andreas

(57) **Abstract**

The present invention provides a hand-holdable electronic device (200) at least comprising at least two antennae (202a, 202b, 202c, 202d) and a signal processing unit (not visible in Fig. 2). During operation of the device, the antennae (202a, 202b, 202c, 202d) transmit and receive from each other electromagnetic waves in the microwave and/or radio frequency parts of the electromagnetic spectrum. The signal processing unit receives from each of the antennae a respective electrical signal, which represents the electromagnetic waves transmitted by the antennae and received by a respective one of the antennae, and analyses a scattering matrix of the transmitted and received electromagnetic waves to determine an electromagnetic environment near to the hand-holdable electronic device (200), *i.e.* within less than about one metre of the device. The electromagnetic environment near to the device can be used to determine a disposition of the device; for example, whether the device is being held in one hand or two by a user. This information about the disposition of the device can be used to adapt the operation of the device accordingly. For example, if the device (200) comprises a touch-sensitive display screen (203), the location and/or orientation of information displayed on the display screen may be varied according to the disposition of the device. The antennae are preferably disposed in a border (201) of the device (200), surrounding the touch-sensitive display screen (203), with members of a pair of antennae disposed on opposite sides of the device from each other. The sensitivity of the device to its electromagnetic environment and the spatial and/or temporal resolution thereof which the device can achieve can both be increased by increasing the number of antennae. The present invention also provides a corresponding method of determining an electromagnetic environment near to a hand-holdable electronic device.

## Description

The present invention relates to a hand-holdable electronic device according to claim 1 and a method of determining an electromagnetic environment near to such a device according to claim 10.

### Background of the Invention

Hand-holdable electronic devices, such as mobile phones, tablet computers, phablets (which are tablet-sized mobile phones), portable navigational devices, games consoles, cameras and so on, often have touch-sensitive display screens for a user to be able to input information to them via one or more virtual on-screen controls, such as virtual buttons and sliders displayed on the display screen. In order to determine the location of a user's finger or of a stylus on the display screen, it is known to provide the display screen with a plurality of conductive tracks, which are able to detect the location of the user's finger or of the stylus on the screen by a variation in the capacitance of the screen at that location.

However, such touch-sensitive display screens can be sensitive to unwanted input of information to such devices which is caused by accidental touches, for example by an elbow or a bag or a pocket of the user. Therefore, one approach which has been proposed in the prior art is to surround the touch-sensitive display screen with an antenna, which is capable of forming a capacitor with an exterior element in contact with the display screen, and to allow input of information to the device via the touch-sensitive display screen only if the capacitance between the antenna and the exterior element falls within a pre-defined range. Thus the device is able to distinguish between an intended input of information via the touch sensitive display screen, such as by a user's finger or a stylus, and unwanted input of information caused by accidental touches, such as by an elbow or a bag of the user, by distinguishing between the different capacitances created by such different exterior elements when they are in contact with the display screen. Such an approach is described in US 2016/0357341. However, such capacitive coupling is only effective over very short distances and the capacitance can only be measured when the exterior element is in very close proximity to or actually touching the display screen.

The touch-sensitive display screens of many hand-holdable electronic devices have an aspect ratio which is other than 1; in other words, they have different dimensions in different directions, and can also be held in different orientations, such that they can adopt either a landscape or a portrait format. If the orientation in which such a device is held changes, it is desirable that at least one of the location and the orientation of any information displayed on the display screen should also change to suit the orientation of the device, for greater convenience to a user. This is often achieved in the prior art by providing the device with one or more other sensors, such as accelerometers and gyros, which can be used to detect the orientation of the device and to change at least one of the location and the orientation of any information displayed on the display screen accordingly. However, such sensors can be slow to react to sudden or rapid movements of the device, and can therefore require the device to be gently shaken in order to relocate and/or re-orient any information displayed on the display screen as desired. Such sensors are also generally unable to detect whether the way in which a device is being held by a user has changed if the orientation of the device has not been changed as well.

### Object of the Invention

It is therefore an object of the invention to provide a hand-holdable electronic device and a method of determining an electromagnetic environment near to such a device.

### Summary of the Invention

The object of the invention is solved by a hand-holdable electronic device according to claim 1. The hand-holdable electronic device at least comprises at least two antennae and a signal processing unit. The at least two antennae are configured to transmit and receive from each other electromagnetic waves in at least one of the microwave and radio frequency parts of the electromagnetic spectrum. The signal processing unit is configured to receive from each of the at least two antennae a respective electrical signal representing such electromagnetic waves transmitted by the at least two antennae and received by a respective one of the antennae, and to analyse a scattering matrix of the transmitted and received electromagnetic waves to determine an electromagnetic environment near to the hand-holdable electronic device.

Preferably, the microwave and radio frequency parts of the electromagnetic spectrum at least comprise electromagnetic waves having a frequency of from about 100 MHz up to about 1 THz and a wavelength of from about 3 metres down to about 0.3 mm. Within these parts of the electromagnetic spectrum, ultrahigh frequency (UHF) and microwave radiation are preferred.

The electromagnetic waves may be transmitted on a single frequency, at multiple frequencies, in a narrow band or over a broadband range of frequencies, according to the requirements of any particular application and the desired level of sensitivity. Transmission of the electromagnetic waves can be controlled by additional control algorithms provided to an RF front end of the device, if the device already comprises such an RF front end, for example for mobile telephony. Otherwise, a suitable transmitter may be provided to the device to supply the electromagnetic waves to the antennae.

Preferably, the electromagnetic environment near to the hand-holdable electronic device comprises the electromagnetic environment within about 1 metre of the device, more preferably within about 0.3 metre of the device, and most preferably within about 0.1 metre of the device. The electromagnetic environment near to the device at least comprises at least one of the relative permittivity and the conductivity of locations near to the device.

The term "scattering matrix of the transmitted and received electromagnetic waves" as used herein means the electromagnetic waves transmitted by any one of the at least two antennae and received by any one of the at least two antennae, including the antenna from which the waves were transmitted. For example, the scattering matrix of two antennae, respectively labelled antenna 1 and antenna 2, has four terms, T_{1, 1}, T_{1, 2}, T_{2, 1} and T_{2, 2}, where the first subscript denotes the identity of the transmitting antenna and the second subscript denotes the identity of the receiving antenna. Each term of the scattering matrix at least comprises the complex amplitude, as well as the phase, of the electromagnetic waves. However, each term may optionally also comprise such other attributes of the electromagnetic waves as their frequency, for use in Doppler analysis of the transmitted and received electromagnetic waves, for example.

Although in theory, it would be possible for the device to comprise only a single antenna and for the signal processing unit to be configured to analyse the electromagnetic waves transmitted and received by just the one antenna (in the manner of radar), in practice, if the single antenna is fixed within the device, the scattering matrix would comprise only a single term (T_{1, 1}), which would not contain enough information to be useful for determining an electromagnetic environment near to the device. At least two antennae are therefore required for the invention. The number of antennae can be increased to more than two, in order to increase the sensitivity and accuracy with which the electromagnetic environment near to the hand-holdable electronic device can be determined by the signal processing unit.

The hand-holdable electronic device as described herein has at least the following advantages. Firstly, the electromagnetic environment near to the hand-holdable electronic device can be used, for example, to determine how the device is being held, even if the orientation of the device has not been changed. For example, it can be determined whether the device is being held in one hand or two, or whether the position of the hand or hands holding the device has changed without changing the orientation of the device. The location and/or orientation of any information displayed on a display screen of the device can therefore be changed accordingly, best to suit a user of the device. Secondly, by determining the electromagnetic environment near to the device from analysing the scattering matrix of the electromagnetic waves transmitted and received by the at least two antennae, the electromagnetic environment near to the device can be determined at distances from the device which are considerably greater than those which can be determined using capacitive coupling, and does not require very close proximity to or actual contact with a touch-sensitive display screen of the device in order for this to be possible.

Thirdly, changes in the orientation of the device, which also change the electromagnetic environment near to the device, can be detected more rapidly and reliably than by other sensors used to detect changes in the orientation of the device, such as accelerometers and gyros.

Advantageous embodiments of the invention may be configured according to any claim and/or part of the following description.

Preferably, the at least two antennae are disposed in a border of the hand-holdable electronic device. This has the advantage of maximizing the separation between the at least two antennae within the confines of the device, and therefore the spatial and/or temporal discrimination or resolution with which the electromagnetic environment near to the device can be determined.

If so, the at least two antennae are preferably disposed on opposite sides of the device from each other, such as on a left side and a right side, or on a top side and a bottom side of the device. This has the advantage of giving the greatest spatial and/or temporal resolution with which the electromagnetic environment near to the device can be determined in a direction which is defined by the opposite sides of the device where the at least two antennae are located.

In a preferred embodiment, the at least two antennae comprise two or more pairs of antennae, each such pair of antennae is disposed on different sides of the device from each other such pair, and the antennae in each such pair are disposed on opposite sides of the device from each other. This has the advantage of allowing the electromagnetic environment near to the device to be determined in different directions each respectively defined by the positions of each respective pair of antennae.

Preferably, the at least two antennae are directional antennae. This solution is beneficial because the power consumption of the antennae, which is needed for the antennae to transmit the electromagnetic waves can be minimised by concentrating the transmitted electromagnetic waves in whichever direction or directions are most appropriate to a particular application, and not in whichever other directions are undesirable. For example, transmission of the electromagnetic waves from one antenna can be directed preferentially towards another antenna in the device, rather than away from the device.

Preferably, the at least two antennae are low-power antennae configured to transmit and receive electromagnetic waves over a range of less than about a metre. This solution is also beneficial because the power consumption of the antennae can be minimised by attenuating the electromagnetic waves outside a region near to the hand-holdable electronic device, where the electromagnetic environment is not relevant to the operation of the device. It also makes analysis of the scattering matrix by the signal processing unit easier, because external influences on the scattering matrix from outside the region near to the device (such as reflections from nearby walls) can thereby be greatly reduced or eliminated.

In another embodiment of the invention, the device further comprises a touch-sensitive display screen, and at least one of the location and orientation of information displayed on the display screen can be varied in dependence on changes in the electromagnetic environment near to the hand-holdable electronic device determined by the signal processing unit. For example, the information displayed on the display screen might comprise one or more user-operable virtual input controls, such as virtual buttons and/or sliders of a graphical user interface, in which case, the location and/or orientation of these virtual input controls can be varied in dependence on changes in the electromagnetic environment near to the hand-holdable electronic device determined by the signal processing unit. Thus, if the display screen has an aspect ratio other than 1, and the orientation of the device is changed such that the display screen changes from portrait to landscape format, a user might move their hands, for example, from holding a shorter edge of the device in one hand (portrait format) to holding both shorter edges of the device in a two-handed grasp (landscape format). This change of grasp can therefore be detected as a change in the electromagnetic environment near to the device, and the layout of the virtual input controls on the display screen can also be changed accordingly, better to suit the user.

However, changes of grasp which do not entail a reorientation of the device can also be detected as corresponding changes in the electromagnetic environment near to the device, and the layout of any information displayed on the display screen can therefore also be varied accordingly in such a case as well. For example, the user might maintain a two-handed grasp of the device in landscape format, but shift the location of their hands on the device by a small amount for greater comfort. Such a change of grasp can therefore also be detected as a change in the electromagnetic environment near to the device, and the layout of information on the display screen can be changed to suit the new grasp of the user better, in an adaptive process. The present invention is therefore superior in at least this respect to other sensors, such as accelerometers and gyros, which would be unlikely or unable to detect such a small change in grasp without any accompanying change in orientation of the device.

On the other hand, a touch-sensitive display screen is only an optional feature of the device, and any changes in the electromagnetic environment near to the hand-holdable electronic device determined by the signal processing unit can alternatively or additionally be used for other purposes, apart from changing the location and/or orientation of information displayed on such a display screen. For example, whether or not the device is being held by a user can also be detected as a change in the electromagnetic environment near to the device, and the device could therefore be activated from or placed into a sleep or standby mode accordingly. If desired, the device could even be woken up just before being picked up by a user, since, as noted above, very close proximity to or actual contact with the device are not required in order for the signal processing unit to determine that there has been a change in the electromagnetic environment near to the device.

However, if the device does comprise a touch-sensitive display screen, and the at least two antennae are disposed in a border of the device, then the screen is preferably surrounded by the border of the device. This solution is beneficial because it optimises the location of the antennae relative to the display screen, so that any changes in grasp of a user as they interact with the display screen can be detected and the display of information on the display screen can be adapted accordingly, regardless of the orientation of the device.

The device may, without limitation, be any one of a mobile phone, a phablet, a tablet computer, a camera, a games console, a portable navigational device, a remote control or any other hand-holdable electronic device. However, the present invention is particularly suitable for embodiment as a games console, wherein rapid and/or frequent changes of grasp by a user are to be expected, and can be detected and responded to, for an enhanced user experience.

The present invention also relates to a method of determining an electromagnetic environment near to a hand-holdable electronic device. The method at least comprises transmitting electromagnetic waves in at least one of the microwave and radio frequency parts of the electromagnetic spectrum from at least two antennae of the device, receiving the transmitted electromagnetic waves with the at least two antennae of the device, and analysing a scattering matrix of the transmitted and received electromagnetic waves to determine the electromagnetic environment near to the hand-holdable electronic device.

The analysis can be carried out using inverse scattering algorithms based on Maxwell's electromagnetic wave equations.

In a further embodiment of this method, analysing the scattering matrix of the transmitted and received electromagnetic waves comprises determining a signal delay between transmission and reception of the electromagnetic waves. Since the separation between the at least two antennae is fixed, any signal delay between transmission and reception of the electromagnetic waves between the antennae can be interpreted by analysing the scattering matrix as having been caused by an interposing or nearby medium with a relative permittivity greater than 1 at the frequency of transmission, such as a hand of a user.

Preferably, the method comprises determining the electromagnetic environment near to the hand-holdable electronic device during a first disposition of the device, determining the electromagnetic environment near to the hand-holdable electronic device during a second, different disposition of the device, and comparing the electromagnetic environment near to the device during the second disposition of the device with the electromagnetic environment near to the device during the first disposition of the device to determine how the disposition of the device has changed. For example, the first disposition of the device may be one in which the device is resting on a table and the second disposition of the device may be one in which the device is being held be a user. A comparison of the electromagnetic environment near to the device during these two different dispositions of the device can therefore be used to determine how the disposition of the device has changed, for example that the device has been picked up from the table. This solution is beneficial because changes in the disposition of the device can then be used to change the operation of the device as desired, according to the type of change which has been detected.

If so, the method preferably comprises determining the location or the movement, or both, of at least one hand which is holding the device from the electromagnetic environment near to the device or from a change in the electromagnetic environment near to the device, or both. This exploits the fact that the human body is relatively highly conductive and has a high relative permittivity, to be able to detect the presence and/or movement of a hand in the electromagnetic environment near to the device.

Preferably, the method further comprises the hand-holdable electronic device learning how to determine a disposition of the device from the electromagnetic environment near to the device. The device can do this by receiving the disposition of the device entered thereto via a human-machine interface of the device, and correlating the disposition of the device thus entered with the electromagnetic environment near to the device when the disposition of the device was thus entered. For example, if the device has a touch-sensitive display screen, this can be used as the human-machine interface. Questions can be presented on the display screen, asking a user to specify whether they are holding the device in one hand or two by pressing either one or another of a pair of virtual buttons displayed on the display screen, each of which represents one of these two alternative possibilities. In another possible example, the human-machine interface could instead ask the user to touch a location on the touch-sensitive display screen which is closest to the location of a user's hand which is holding the device. The device can then correlate whatever information the user has entered into the device via the human-machine interface with the electromagnetic environment near to the device at the time that the information was entered, so that the device can recognize the same disposition of the device in the future when the same or a similar electromagnetic environment presents itself. This process effectively amounts to an initial calibration of the device. Moreover, the same method may also be repeated during on-going use of the device, in order to improve the accuracy with which the disposition of the device can be recognized, through a process of on-going machine learning.

In one possible preferred embodiment, the method may comprise combining the electromagnetic environment near to the device as determined by analysing the scattering matrix of the transmitted and received electromagnetic waves with an output from at least one other sensor of the device, in order to determine the disposition of the device. For example, the at least one other sensor may comprise one or more accelerometers, gyros, or capacitive touch sensors. These other sensors may give their own respective indications of the disposition of the device, for example the orientation of the device or that one or more fingers of a user are in contact with a touch-sensitive display screen of the device. These indications can be combined with the electromagnetic environment near to the device as determined by analysing the scattering matrix of the transmitted and received electromagnetic waves to give a more accurate indication of the disposition of the device than if the other sensors were used on their own, as well as to improve the sensitivity of the other sensors.

The present invention further relates to a computer program product or a program code or system for executing one or more than one of the herein described methods.

Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a schematic diagram of a prior art capacitive coupling device comprising an antenna for detecting contact of an exterior element with a touchpad; and
Fig. 2 is a schematic plan view of an embodiment of a hand-holdable electronic device.

### Detailed Description of the Drawings

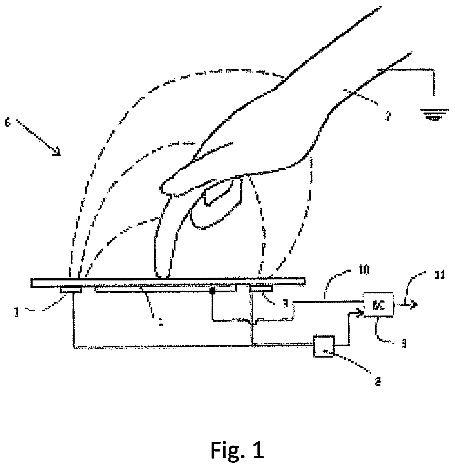

Fig. 1 schematically shows a prior art capacitive coupling device 6. The device 6 comprises a touchpad 1 configured to receive a command and at least one antenna 3 arranged around the touchpad 1 in such a way as to frame the touchpad. The antenna 3 is capable of forming a capacitor with at least one exterior element 2, such as a hand of a user, when the exterior element 2 is in contact with the touchpad 1. The device 6 further comprises means 8 connected to the antenna 3 for measuring the capacitance of the capacitor formed by the antenna 3 and the at least one exterior element 2. The device 6 also comprises means 9 of control of the command, which receives the command from the touchpad 1 via an input line 10, as well as receiving an output from the capacitance measuring means 8. The means 9 is configured so as to only take account of the command received by the touchpad 1 when the capacitance measured by the measuring means 8 lies within a predetermined range. Thus the command received by the touchpad 1 only appears on an output line 11 from the control means 9 when the capacitance lies within the predetermined range.

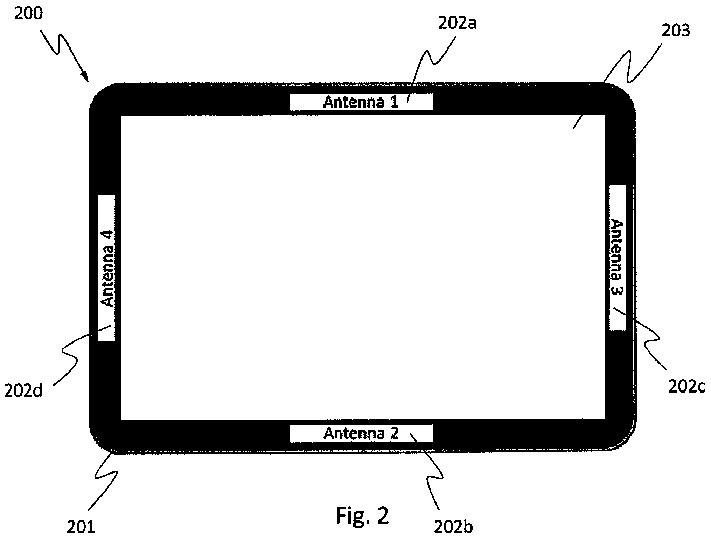

Fig. 2 schematically shows an embodiment of a hand-holdable electronic device 200 according to the invention, which in the illustrated example, is a phablet (*i.e*. a tablet-sized mobile phone). The device 200 comprises a touch-sensitive display screen 203 surrounded by a border 201. Disposed in the border 201 is a plurality of antennae 202a, 202b, 202c, 202d. The antennae 202a, 202b, 202c, 202d comprise two pairs of antennae, 202a, 202b and 202c, 202d. Each of the pairs of antennae is disposed on different sides of the device 200 from each other such pair. Thus the pair of antennae 202a, 202b are disposed on the two longer sides of the device 200, whereas the pair of antennae 202c, 202d are disposed on the two shorter sides of the device 200. The antennae in each of the pairs are disposed on opposite sides of the device from each other. Thus the antenna 202a is disposed on an opposite side from the antenna 202b and the antenna 202c is disposed on an opposite side from the antenna 202d. The device 200 further comprises a signal processing unit, which is not visible in Fig. 2.

During operation, the antennae transmit and receive from each other electromagnetic waves in at least one of the microwave and radio frequency parts of the electromagnetic spectrum. The signal processing unit is connected to each one of the antennae to receive from them a respective electrical signal, which represents the electromagnetic waves which have been transmitted by all of the antennae and received by the respective ones of the antennae. The signal processing unit takes these electrical signals and analyses a scattering matrix of the transmitted and received electromagnetic waves to determine an electromagnetic environment near to the hand-holdable electronic device 200. An example of such a scattering matrix is shown in Table 1, below. Since, in the illustrated example, there are four antennae in total, the scattering matrix in this case has 4 x 4 = 16 terms, T_{a, b}, which represent all of the possible different combinations of transmitting antenna and receiving antenna, including those combinations where the receiving antenna is the same as the transmitting antenna and receives the electromagnetic waves it has transmitted by backscattering.

In this example, all of the antennae are directional antennae and each transmits most of its electromagnetic waves towards the opposite antenna in its pair, with subsidiary lobes of electromagnetic radiation also emanating in opposite directions. All of the antennae are also low-power antennae and therefore are only able to transmit and receive electromagnetic waves over a range of less than a metre, in fact only about 0.3 metre. This is more than adequate for the purposes of determining the electromagnetic environment near to the device 200, but also ensures that the power consumption of the antennae is very low, and is in no way comparable to the power consumption of any other antenna which the device 200 may comprise for radio transmission of data over longer distances, such as for mobile telephony.

The terms T_{a, b}, of the scattering matrix are also very different from those encountered in mobile telephony, as they comprise more than just a received signal strength indicator (RSSI). Each of the terms at least comprises the complex amplitude, as well as the phase, of the electromagnetic waves, which are required for the signal processing unit to determine the electromagnetic environment near to the device 200. However, each term may optionally also comprise such other attributes of the electromagnetic waves as their frequency, which can be used by the signal processing unit, for example, in Doppler analysis of the transmitted and received electromagnetic waves, as well as their time of flight, which can be inferred by the signal processing unit from the known separation of the antennae for each term of the scattering matrix. Any variation in the time of flight for each term can be used to determine a signal delay and therefore the interposition or nearby presence of a medium with a relative permittivity greater than 1 at the frequency of transmission, such as a hand of a user.

**Table 1- Exemplary scattering matrix**

| | **Antenna 1** | **Antenna 2** | **Antenna 3** | **Antenna 4** |
|---|---|---|---|---|
| **Antenna 1** | T_{1, 1} | T_{1, 2} | T_{1, 3} | T₁, ₄ |
| **Antenna 2** | T_{2, 1} | T_{2, 2} | T_{2, 3} | T_{2, 4} |
| **Antenna 3** | T_{3, 1} | T_{3, 2} | T_{3, 3} | T_{3, 4} |
| **Antenna 4** | T_{4, 1} | T_{a,} | T_{4, 3} | T_{4, 4} |

Once the signal processing unit has analysed the scattering matrix, the location and/or orientation of information displayed on the display screen 203 can be varied in dependence on changes in the electromagnetic environment near to the device 200 which the signal processing unit has determined. The signal processing unit may also compare the electromagnetic environment near to the device 200 at different times, for example when the device 200 is in different dispositions, to determine how the disposition of the device has changed. This is normally carried out in a dynamic fashion, with the antennae 202a, 202b, 202c, 202d always on, and the signal processing unit always comparing the electromagnetic environment from one moment with that from the next, for real-time operation. Alternatively, the antennae 202a, 202b, 202c, 202d can instead be operated in a pulsed transmission mode, in order to save power.

The electromagnetic environment near to the device 200 and/or a change in the electromagnetic environment near to the device can be used to allow the signal processing unit to determine the location and/or movement of at least one hand which is holding the device 200. This may be achieved by the hand-holdable electronic device 200 learning how to determine a disposition of the device from the electromagnetic environment near to the device. The device 200 does this by a user entering the manner in which they are holding the device thereto via the touch-sensitive display screen 203, which the device 200 receives and correlates with the electromagnetic environment near to the device 200, as determined by the signal processing unit, when this information was entered via the display screen 203.

In the illustrated example, the device 200 further comprises other sensors, such as accelerometers and gyros (also not visible in Fig. 2). In this embodiment, an output from the signal processing unit, which represents the electromagnetic environment near to the device 200 determined by analysing the scattering matrix of the transmitted and received electromagnetic waves, is combined with an output from these other sensors of device 200 to help determine the disposition of the device 200 more accurately and rapidly than if the output of these other sensors were used on its own.

In summary, therefore, the present invention provides a hand-holdable electronic device comprising at least two antennae and a signal processing unit. During operation of the device, the antennae transmit and receive from each other electromagnetic waves in the microwave and/or radio frequency parts of the electromagnetic spectrum. The signal processing unit receives from each of the antennae a respective electrical signal, which represents the electromagnetic waves transmitted by the antennae and received by a respective one of the antennae, and analyses a scattering matrix of the transmitted and received electromagnetic waves to determine an electromagnetic environment near to the hand-holdable electronic device, *i.e.* within less than about one metre of the device. The electromagnetic environment near to the device can be used to determine a disposition of the device; for example, whether the device is being held in one hand or two by a user. This information about the disposition of the device can be used to adapt the operation of the device accordingly. For example, if the device comprises a touch-sensitive display screen, the location and/or orientation of information displayed on the display screen may be varied according to the disposition of the device. The antennae are preferably disposed in a border of the device, surrounding the touch-sensitive display screen, with members of a pair of antennae disposed on opposite sides of the device from each other. The sensitivity of the device to its electromagnetic environment and the spatial and/or temporal resolution thereof which the device can achieve can both be increased by increasing the number of antennae. The present invention also provides a corresponding method of determining an electromagnetic environment near to a hand-holdable electronic device.

**Reference Numerals:**

| | | | |
|---|---|---|---|
| 1 | Touchpad | 200 | Hand-holdable electronic device |
| 2 | Exterior element | 201 | Device border |
| 3 | Antenna | 202a, 202b, 202c, 202d | Antennae |
| 6 | Capacitive coupling device | | |
| 8 | Means for measuring capacitance | 203 | Device screen |
| 9 | Command controller | | |
| 10 | Input line from touchpad to command controller | | |
| 11 | Output line from command controller | | |

## Claims

1. A hand-holdable electronic device (200) at least comprising:
at least two antennae (202a, 202b, 202c, 202d) configured to transmit and receive from each other electromagnetic waves in at least one of the microwave and radio frequency parts of the electromagnetic spectrum; and
a signal processing unit configured to receive from each of the at least two antennae a respective electrical signal representing such electromagnetic waves transmitted by the at least two antennae and received by a respective one of the antennae, and to analyse a scattering matrix of the transmitted and received electromagnetic waves to determine an electromagnetic environment near to the hand-holdable electronic device.

2. A hand-holdable electronic device according to claim 1, wherein the at least two antennae (202a, 202b, 202c, 202d) are disposed in a border (201) of the device (200).

3. A hand-holdable electronic device according to claim 2, wherein the at least two antennae (202a, 202b, 202c, 202d) are disposed on opposite sides of the device from each other.

4. A hand-holdable electronic device according to any one of the preceding claims, wherein the at least two antennae (202a, 202b, 202c, 202d) comprise two or more pairs of antennae, each pair of antennae is disposed on different sides of the device from each other such pair, and the antennae in each such pair are disposed on opposite sides of the device from each other.

5. A hand-holdable electronic device according to any one of the preceding claims, wherein the at least two antennae (202a, 202b, 202c, 202d) are directional antennae.

6. A hand-holdable electronic device according to any one of the preceding claims, wherein the at least two antennae (202a, 202b, 202c, 202d) are low-power antennae configured to transmit and receive electromagnetic waves over a range of less than about a metre.

7. A hand-holdable electronic device according to any one of the preceding claims, further comprising a touch-sensitive display screen (203), and wherein at least one of the location and orientation of information displayed on the display screen (203) can be varied in dependence on changes in the electromagnetic environment near to the hand-holdable electronic device determined by the signal processing unit.

8. A hand-holdable electronic device according to claim 7 as dependent on claim 2, wherein the border (201) of the device (200) surrounds the touch-sensitive display screen (203).

9. A hand-holdable electronic device according to any one of the preceding claims, wherein the device is any one of a mobile phone, a phablet, a tablet computer, a camera, a games console, a portable navigational device and a remote control.

10. A method of determining an electromagnetic environment near to a hand-holdable electronic device, the method at least comprising:
transmitting electromagnetic waves in at least one of the microwave and radio frequency parts of the electromagnetic spectrum from at least two antennae of the device;
receiving the transmitted electromagnetic waves with the at least two antennae of the device; and
analysing a scattering matrix of the transmitted and received electromagnetic waves to determine the electromagnetic environment near to the hand-holdable electronic device.

11. A method according to claim 10, wherein analysing the scattering matrix of the transmitted and received electromagnetic waves comprises determining a signal delay between transmission and reception of the electromagnetic waves.

12. A method according to claim 10 or claim 11, comprising:
determining the electromagnetic environment near to the hand-holdable electronic device during a first disposition of the device;
determining the electromagnetic environment near to the hand-holdable electronic device during a second, different disposition of the device; and
comparing the electromagnetic environment near to the device during the second disposition of the device with the electromagnetic environment near to the device during the first disposition of the device to determine how the disposition of the device has changed.

13. A method according to claim 12, further comprising determining at least one of the location and the movement of at least one hand which is holding the device from at least one of the electromagnetic environment near to the device and a change in the electromagnetic environment near to the device.

14. A method according to any one of claims 10 to 13, further comprising the hand-holdable electronic device learning how to determine a disposition of the device from the electromagnetic environment near to the device by:
receiving the disposition of the device entered thereto via a human-machine interface of the device; and
correlating the disposition of the device thus entered with the electromagnetic environment near to the device when the disposition of the device was thus entered.

15. A method according to any one of claims 10 to 14, further comprising combining the electromagnetic environment near to the device as determined by analysing the scattering matrix of the transmitted and received electromagnetic waves with an output from at least one other sensor of the device to determine the disposition of the device.
